# EUROPEAN PATENT SPECIFICATION

(11) **EP 3 204 300 B1**
(45) Date of publication and mention of the grant of the patent: **31.10.2018**
(21) Application number: 15747546.8
(22) Date of filing: 30.06.2015
(51) Int. Cl.: B65B 49/00, B65B 49/08, B65B 23/20, B65B 59/02, B65B 59/04, B65B 41/02, B25J 15/00, B65B 51/02, B65B 57/00

(54) **PACKAGING AND GRIPPING GROUP FOR FLAT ARTICLES, AS WELL AS RESPECTIVE METHOD**
VERPACKUNGS- UND GREIFGRUPPE FÜR FLACHE GEGENSTÄNDE SOWIE ENTSPRECHENDES VERFAHREN
GROUPE D'EMBALLAGE ET DE SAISIE POUR ARTICLES PLATS, ET PROCÉDÉ RESPECTIF

(30) Priority: 08.10.2014 IT VR20140239
(43) Date of publication of application: 16.08.2017
(73) Proprietor: Bema S.r.l., 42030 Viano (Reggio Emilia) (IT)
(72) Inventor: MURAROTTO, Emilio, I-42030 Viano (Reggio Emilia) (IT)
(74) Representative: Feltrinelli, Secondo Andrea
(86) International application number: PCT/IB2015/054918
(87) International publication number: WO 2016/055876

(56) References cited:
- EP-A1- 2 578 500
- WO-A1-2014/117820
- JP-A- H06 210 584
- US-A- 4 400 929
- US-A- 5 199 845

## Description

### TECHNICAL FIELD OF THE INVENTION

The present invention relates to a group for packaging and gripping flat articles with polygonal form, e.g. flat articles with rectangular, square form etc., separately or arranged in a stack, as well as a relative method for packaging and gripping the aforesaid articles.

According to the present invention, the packaging group forms a package through the folding of a blank, e.g. made of cardboard, around a stack of flat articles (or a single article) and, then, takes them in order to transfer them to a subsequent station for another treatment.

In particular, the present invention relates to a packaging and gripping group which forms a package around one or more plates or tiles, e.g. large-size ceramic plates or tiles, stacked on each other, and wherein the packaging group is in turn fixed to a handling robot which can be anthropomorphic or Cartesian.

### STATE OF THE PRIOR ART

Generally, in a production line of industrial articles, such as ceramic plates or tiles, there is a packaging station comprising a packaging group which obtains a protection packaging around a single article, if this has particularly large size, or around a plurality of articles stacked on each other.

After having been packaged, the article or the stack of articles are moved by suitable devices towards subsequent stations for further treatments.

Usually, one such packaging station is situated in proximity to the terminal portion of the article production line.

The packaging mainly acts as an element of protection of the article or articles contained therein, and it facilitates the handling and transport thereof.

With specific reference to the field of production of ceramics, and in particular ceramic plates or tiles, a station is arranged along the plate or tile production line for packaging and packing the obtained articles, comprising one such packaging group.

The ceramic plates or tiles, before being packaged, can be arranged stacked on each other, in a number that can vary in accordance with specific requirements.

In the case of large-size ceramic plates or tiles, particular attention must be given to ensure that the overall mass of the final package does not exceed a specific maximum value, e.g. 25 kilograms, so that there may a very small number of stacked articles, and at the very least the package may be constituted by a single article.

Generally, the packaging of plates or tiles is obtained through the folding of a cardboard blank therearound, with defines the protection covering.

For example, a tiles packaging station is known at which the folding of a cardboard blank around the tiles occurs, in order to form a package.

The packing station comprises a frame, arranged along a supply line for the tiles to be packed, to which a pair of opposite movable sides is operatively connected.

Each movable side is hinged to the frame and can be rotated around a substantially horizontal rotation axis between a rest position, in which it does not engage a blank to be folded, and a work position, in which it engages a respective side of the blank to be folded.

In practice, by moving two opposite movable sides, it is possible to fold the cardboard blank (or blank made of another suitable material) around two corresponding opposite sides of the stack of tiles.

In order to complete the package, one proceeds in an analogous manner by rotating the stack of tiles or the movable sides around a vertical axis, by about ninety degrees, thus in order to be able to operate on the remaining two sides of the stack.

One such packaging station has a complex structure and little flexibility.

If it is necessary to modify the format of the tiles to be packed, the packaging station must be stopped, actually blocking the production line, and suitably equipped so to be able to operate on the new format. An additional example of such a packaging group is known from patent document EP 2 578 500 A1 where it is disclosed a packaging and gripping group for obtaining a packaging through the folding of a blank or sheet around an article, comprising a pair of support frames connectable to a main adjustable frame, said pair of support frames defining at least one first direction and one second direction, transverse to each other, and comprising at least one pair of first sliding guides aligned along said second direction, and at least one pair of second beams aligned parallel to each other along said first direction, each operatively connected slidingly to said at least one pair of first guides through sliders, said second beams each comprising at least one second sliding guide aligned along said first direction, said packaging and gripping group comprising folding means slidingly engaged along said second sliding guides of said second beams, first moving means of said pair of second beams along said second direction.

Hence, there is the need in the field to improve the characteristics of the currently available packaging and packing stations.

In particular, there is the need to provide a packaging and packing station whose operative size can be suitable for the different formats of the articles to be packed, in the scope of an efficient and extremely flexible solution.

There is also the need to provide a packaging station which allows ensuring a high productivity to the production line in which it is installed, reducing the times necessary for obtaining the packaging of the articles and the times for a possible variation of the format of the package to be obtained.

### OBJECTS OF THE INVENTION

The technical task of the present invention is to improve the state of the art.

In the context of such technical task, one object of the present invention is to provide a packaging and gripping group for obtaining a package of one or more flat articles stacked on each other, through the folding of a blank, e.g. made of cardboard, around the article or stack of articles, in which such packaging and gripping group can be adapted to the size of the article to be packed in brief times and in a simple and efficient manner.

A further object of the present invention is to provide a packaging and gripping group of extremely effective automated type, capable of reducing the overall time necessary for the folding of the package around the article or the stack of articles.

A further object of the present invention is to provide a packaging and gripping group which allows picking up and moving an article or a stack of packed articles to the interior of a packaging station or into the immediate vicinity thereof.

Still another object of the present invention is to provide a packaging and gripping group whose use is extremely flexible and which can be easily implemented in pre-existing production lines in order to increase the production capacity thereof.

In accordance with one aspect of the present invention, a packaging and gripping group is provided according to claim 1.

In accordance with another aspect of the present invention, a production line for tiles according to claim 12 is provided, e.g. ceramic tiles, comprising a packaging and gripping group according to claim 1 or one of its dependent ones.

In accordance with a further aspect of the present invention, a process is provided for packing an article or a stack of articles, through the folding of a blank around the same, executed through the aforesaid packaging and gripping group according to the enclosed claim 13.

The dependent claims refer to preferred and advantageous embodiments of the invention.

### BRIEF DESCRIPTION OF THE DRAWINGS

Further characteristics and advantages of the present invention will be clearer from the detailed description of a preferred but not exclusive embodiment of a packaging and gripping group, illustrated as a non-limiting example in the set of drawings in which:
figure 1 is a top perspective view of a packaging and gripping group according to the present invention;

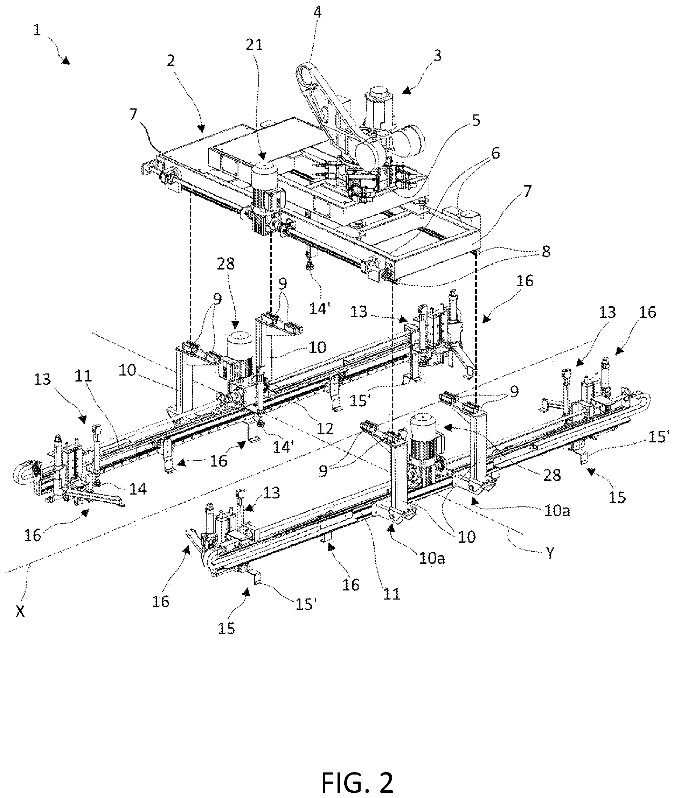

figure 2 is a top and exploded perspective view of the packaging and gripping group pursuant to figure 1;
figure 3 is a bottom perspective view of a detail of the packaging and gripping group according to the present invention;

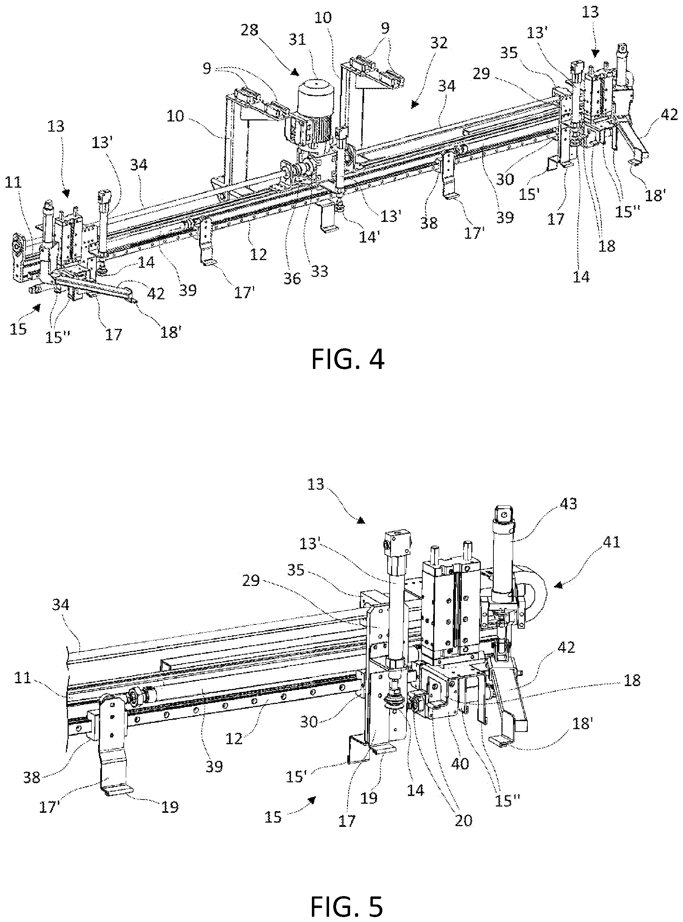

figure 4 is a top perspective view of a detail of the packaging and gripping group pursuant to figure 1;
figure 5 is a detailed enlarged view of a detail of the packaging group pursuant to figure 4;
figure 6 is a detailed enlarged view of a detail of the packaging and gripping group pursuant to figure 5, illustrated according to a further view point;
figure 7 is a plan schematic view of a packaging station according to the present invention;
figure 8 is a top plan view of the packaging group according to the present invention in an operative configuration;
figure 9 is a top plan view of the packaging group according to the present invention in a further operative configuration; and
figures 10 to 13 are schematic representations of several steps of folding of a package, carried out by means of the packaging and gripping group according to the present invention.

### EMBODIMENTS OF THE INVENTION

With reference to the enclosed figures, a packaging and gripping group is illustrated overall indicated with the reference number 1.

The packaging and gripping group 1 according to the present invention allows packaging an article or a stack of articles through the folding of a blank, e.g. made of cardboard, around the same, as is better described hereinbelow. According to a further aspect of the present invention, the packaging and gripping group 1 advantageously allows picking up and moving an article or a stack of articles thus packed to the interior of a packaging/packing station. Hereinbelow in the present description, with the expression article A it is intended to indicate both a single flat article, such as a plate or a tile, and a stack of flat articles superimposed on each other.

As stated, for the obtainment of the package, sheets of cardboard can be used that have been previously suitably cut, for example through die-cutting, as a function of the size of the article A to be packed, or packing sheets, also suitably previously cut, made of another material adapted for the purpose without departing from the protective scope of the present invention.

The packaging and gripping group 1 can be used in a production line of flat ceramic articles, such as ceramic plates or tiles and the like, but it could also be installed in production lines of flat articles of another type, without any limitation for the purposes of the present invention.

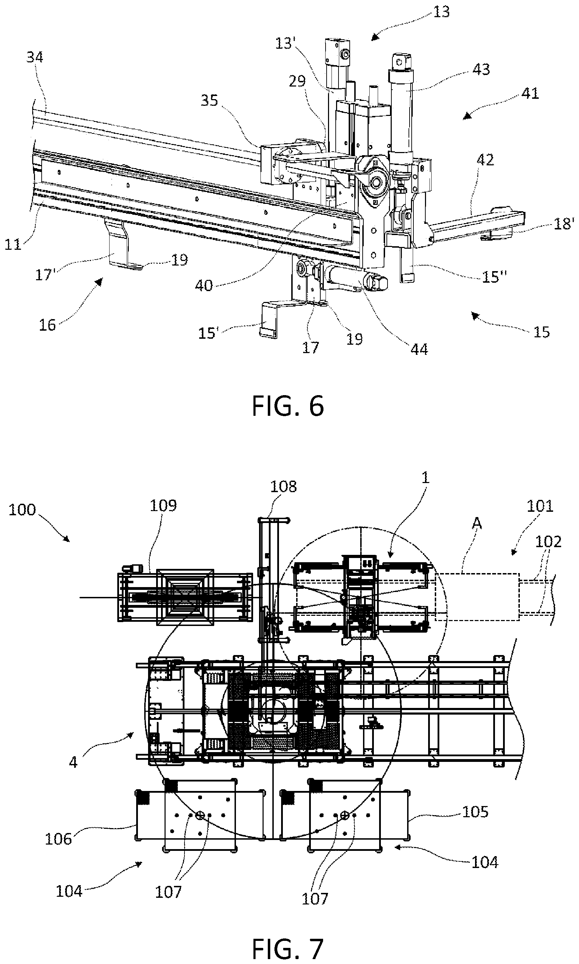

More in detail, the packaging and gripping group 1 according to the invention can be used in a packaging station of a production line of flat ceramic articles, for example ceramic plates or tiles, schematically illustrated in figure 7.

In the packaging station, indicated with 100, one or more lines for advancing flat articles A to be packed, e.g. a line 101, can be present.

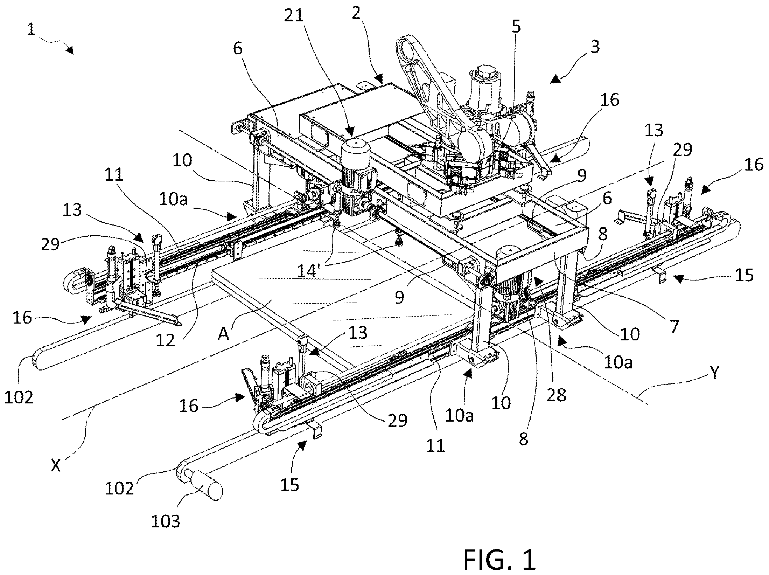

The advancing line 101 comprises means for advancing the articles A, e.g. one or more belts 102 side-by-side each other (see also figure 1), or through other similar means, on which the articles A are abutted.

The belts 102, whose relative distance can be varied by means of suitable motor means, not illustrated in the figures, as a function of the size of the articles A to be moved, comprise a surface for the contact with the articles A provided with anti-slip means (not illustrated), e.g. a rubber-backing.

Due to the anti-slip means of the belts 102, the articles A maintain a predetermined position with respect to the belts 102.

The belts 102 comprise motor means 103 (figure 1) which drive the belts 102 themselves and which are controlled in the movement thereof; the motor means 103 can for example comprise brushless motors with controlled rotation. Therefore, the articles A, which advance on the belts 102, can be transported with precision into a predetermined and known position in which the package will be subsequently made.

The packaging station 100 also comprises stores 104 for the die-cut cardboard pieces B, or the blanks of another suitable type, which will constitute the packaging of the articles A.

In the example illustrated in figure 7, two stores 104 are present which comprise stacks 105 and 106 of die-cut cardboard B which can have different size so to be used for packing corresponding articles A of different size. The stacks 105 and 106 of die-cut cardboard B have the cardboard aligned and in a position that is predetermined and known due to suitable alignment means 107. In one version of the present invention, the alignment means 107 can comprise at least one pair of rods which act as a guide for the die-cut cardboard B or sheets, which in turn have holes corresponding to the position of the rods.

Due to the fact that the alignment means comprise two guide rods arranged in a substantially central zone of the die-cut cardboard or sheets, it allows very simply storing die-cut cardboard or sheets having even very different size.

This allows having stores without external guides at the corners of the die-cut cardboard or of the sheets, it only being necessary that holes are provided in the die-cut cardboard or in the sheets, such holes corresponding to the position of the rods.

On the contrary, if the store had had the external guides as usual, these external guides would have had to be adapted each time to the different sizes of the die-cut cardboard or of the sheets; in addition, the external guides could have easily interfered with the same packaging and gripping group 1.

It must also be observed that the diameter of the holes provided in the die-cut cardboard or in the sheets is slightly greater than the diameter of the guide rods, in order to facilitate a quick loading of the cardboard into the store.

As will be explained hereinbelow, the actual centering of the die-cut cardboard will occur subsequently, with suitable devices of the packaging and gripping group 1.

In the packaging station 100, a gluing station is present for applying glue or the like, indicated with the number 108, comprising means for the selective emission of glue on predefined portions of the die-cut cardboard B.

During the final steps of the folding, the glue allows joining together the edges of the blank folded on each other, thus obtaining a stable closure of the package itself.

In the packaging station 100, a station can also be present for depositing/unloading the packed articles A, indicated with 109, as the same articles await transfer to subsequent treatment stations or to a storage store.

By way of example, the packaging station 100 can comprise a station for parking or storing packaging and gripping groups according to the present invention, not illustrated in the figures.

In the parking station, a packaging and gripping group 1 can be momentarily deposited, after having been disconnected from the arm of the movement robot, e.g. in order to execute the maintenance thereof, and substituted with a further packaging and gripping group 1.

In such a manner, the stop times of the packaging station 100 are reduced to the minimum, ensuring a high productivity thereof.

In a packaging station 100 according to the present invention, it must be observed that knowing the position of the articles A and that of the die-cut cardboard B in a substantially exact manner allows linking, with extreme precision, the die-cut cardboard B to the articles A when the packaging is made around the articles A themselves.

In the following description, reference will be made to a packaging and gripping group 1 for articles whose form in plan view is substantially rectangular, or quadrangular.

In these cases, and according to what will be better explained hereinbelow, the packaging and gripping group 1 comprises two subgroups arranged substantially orthogonal to each other.

Nevertheless, further embodiments of the packaging and gripping group according to the present invention are possible, not illustrated herein, through which it is possible to package and pick up an article or a stack of articles which are substantially flat, with a non-rectangular form in plan view, without departing from the protective scope the attached claims.

For example, if the articles to be packed had a hexagonal form in plan view, the packaging and gripping group can comprise three subgroups arranged substantially at 120 degrees from each other.

In the present version, illustrated in the figures, the packaging and gripping group 1 thus has a structure with two subgroups which are extended along two directions substantially orthogonal to each other, indicated in the enclosed figures as first direction X and second direction Y.

In accordance with such version, the operative size of the packaging and gripping group 1 can then be adjusted along the first direction X and/or along the second direction Y, according to modes described below.

With reference to figure 1, the packaging and gripping group 1 comprises a support frame 2 fixed, by means of quick coupling means 3, to an arm 4 of a robot, e.g. an anthropomorphic or Cartesian robot with at least four movement axes.

The quick coupling means 3 comprise a shank that can be selectively coupled to the arm 4 of the robot by means of engagement means, not illustrated since they are not the object of the present invention.

In accordance with one aspect of the present invention, the packaging and gripping group 1 can also comprise a connection joint 5, interposed between the top of the support frame 2 and the quick coupling means 3.

According to the version illustrated in the enclosed figures, the connection joint 5 comprises two portions, facing each other during use, selectively connectable/disconnectable to/from each other in an automated manner by means of suitable actuators.

The actuators can be controlled by means of sensor means able to detect the stresses acting at the opposite ends of the connection joint 5.

If the sensors detect a stress greater than a maximum pre-established value, the same command the actuation of the actuators for the release of the two portions of the connection joint 5.

The connection joint 5 thus constitutes a safety element, which prevents possible damaging stresses from being transmitted to the arm 4 of the robot.

In addition, the connection joint 5 also acts as a further device for connecting between the robotic arm 4 and the support frame 2, in addition to the above-indicated quick coupling means 3.

According to what is better explained hereinbelow, the robot allows moving the packaging and gripping group 1 in a manner so as to form a packaging around the articles A and to transfer the package thus formed into subsequent treatment stations, indicated by way of example in figure 7 with reference numbers 108 and 109.

The support frame 2, which has an approximately rectangular shape, comprises two first beams 6, arranged at a certain distance from each other, substantially parallel to each other and oriented along the second direction Y, and two crosspieces 7 for the connection between the two first beams 6, approximately oriented according to the first direction X.

Each first beam 6 comprises a first sliding guide 8 in which sliders 9 are arranged, which are attached to vertically-arranged arms 10 that in turn support two second beams 11, which are substantially parallel to and opposite each other and orientated along the first direction X.

The arms 10 support the beams 11 through the oscillating supports 10a provided with a safety device which blocks the robot in case of collision with the articles A or other elements of the packaging station 100.

Each second beam 11 comprises a second sliding guide 12, which is substantially extended over the entire length of the second beam 11.

In the embodiment illustrated in the figures, each of the second beams 11 is supported by two arms 10 which, by means of the sliders 9, which slide in the first sliding guides 8, allow a movement of the same second beams 11 in the second direction Y.

The second beams 11, therefore, can be mutually moved close/away along the second direction Y.

The packaging and gripping group 1 comprises means, indicated with 13, for gripping a blank B from a store 104. The gripping means 13 are suitable for holding and picking up a blank B from the stack present in a store 104 and retaining it during the subsequent operative steps of the packaging and gripping group 1.

According to the illustrated embodiment, the gripping means 13 can comprise suction means 14, e.g. suckers connected to a vacuum source.

In addition, the suction means 14 are operatively connected to the packaging and gripping group 1 by means of the actuation devices 13', e.g. pneumatic or hydraulic pistons.

The actuation devices 13' allow varying the elevation where the suction means 14 are situated, for example in order to facilitate the step of gripping the blank B or the sheet from the store 104.

Further non-illustrated embodiments of the suction means 14 are possible, comprising suction devices or the like without any limitation.

According to one version of the present invention, the suction means 14 are connected to the second beams 11, slidable along the second guides 12, i.e. along the first direction X, by means of sliders or similar means.

Further suction means 14' can be provided below the support frame 2, or constrained to the second beams 11, preferably at the centerline of the latter, thus distributing the grip of the blank B over a greater area of the latter.

In the case of large-size blanks B, this represents an advantage since deformation thereof is prevented during the various operative steps of the packaging and gripping group 1.

The positioning of the suction means 14 connected to the second beams 11 can be modified along the first direction X and/or along the second direction Y, as better described hereinbelow, and adapted to the actual size of the blanks B or sheets to be picked up.

The modifications of the positioning of the gripping means 13, and hence of the suction means 14, only occur with a command coming from a suitable software installed in a control unit, or from equivalent command means, and therefore further adaptations or substitutions of mechanical elements are not necessary.

According to one aspect of the present invention, the packaging and gripping group 1 can have alignment and centering means, indicated overall with 15, for the correct alignment and centering of the packaging and gripping group 1 above the blanks B to be picked up, which as stated lie stacked in a store 104. In the illustrated embodiment, the alignment and centering means 15 comprise first abutment elements 15' and second abutment elements 15", for example in the form of bent brackets, operatively connected to the second beams 11, slidable along the second guides by means of sliding blocks or sliders, for example.

The first abutment elements 15' along with the second abutment elements 15" are extended, at least on the lower part, from the second beams 11, and act as abutment elements at least for the perimeter edges of the blanks B, thus allowing - during the pick-up step - precisely centering the position of the packaging and gripping group 1 with that of the blank B itself.

More in detail, the first abutment elements 15' are oriented substantially parallel to the first direction X, for the alignment and centering, along the second direction Y, of the packaging and gripping group 1 with the blank B, while the second abutment elements 15" are oriented parallel to the second direction Y for the alignment and centering along the first direction X. Analogous to that stated above for the gripping means 13, the position of the alignment and centering means 15 can be modified along the first direction X and/or along the second direction Y, as a function of the actual size of the blank B to be picked up.

Also in this case, the modifications of the positioning of the alignment and centering means 15 only occur with a command coming from a suitable software installed in a control unit, or by equivalent command means, and further adaptations or substitutions of mechanical elements are not necessary. Due to the characteristics of the advancing line 101, the position of an article A to be packed can be determined in a precise manner.

Therefore, the ability to center the packaging and gripping group 1 above the article A, in the same precise manner, ensures the precise alignment and centering of the blank B with respect to the article A.

The packaging and gripping group 1 comprises means for folding the blank B or sheet, indicated overall with the reference number 16.

The folding means 16 can be movably connected, e.g. by means of sliders or trolleys or the like, to the second beams 11 along the second sliding guides 12. Analogous to that stated for the gripping means 13 and for the alignment and centering means 15, the position of the folding means 16 can be modified along the first direction X and/or along the second direction Y, as a function of the actual size of the article A to be stacked.

More in detail, the folding means 16 comprise first folding elements 17, for the folding of the blank B along the first direction X, and second folding elements 18, for the folding of the blank B along the second direction Y.

According to one version of the present invention, the first folding elements 17 and the second folding elements 18 can be shaped like substantially L-shaped brackets, and comprise respective lower end portions 19, 20 for abutting with the blank B to be folded.

The end portions 19, 20 can be obtained by bending on itself the lower terminal portion 19, 20 respectively of the first folding elements 17 and of the second folding elements 18, thus obtaining a rounded edge, such to not ruin the blank B.

With reference to the illustrated embodiment, the packaging and gripping group 1 comprises first means for moving the second beams 11 along the second direction Y, in order to mutually move them close/away, indicated overall with 21.

The first moving means 21 drive, along the second direction Y, the gripping means 13, the alignment and centering means 15 and the folding means 16 connected to the second beams 11.

With reference to that illustrated in the figures, the second beams 11 and the first moving means 21 constitute a first subgroup of the packaging and gripping group 1.

By way of example, the first moving means 21 can comprise at least one first electric gear motor group 22 and first motion transmission members 23 operatively connected to the second beams 11.

The first motion transmission members 23 are configured in a manner so as to draw the motion from the first gear motor group 22 and allow wide travels of the second beams 11 along the first slide guides 8.

The first motion transmission members 23 can comprise at least one device for example of ball bearing screw-nut thread type, or roller screw-nut thread type, or maneuver screw-nut thread devices with suitable thread profiles, or other devices adapted to transform a rotary motion into a linear motion, or similar means, operatively connected to the first gear motor group 22.

Further embodiments of the first motion transmission members 23 are nevertheless possible, capable of executing precise movements with high travels.

According to the illustrated embodiment, the at least one first gear motor group 22 comprises two respective motion output shafts 24, opposite each other and aligned along the second direction Y.

According to such version, the first motion transmission members 23 comprise a pair of devices of ball bearing screw-nut thread type, or roller screw-nut thread type, or maneuver screw-nut thread devices with suitable thread profiles, or other devices adapted to transform a rotary motion into a linear motion, or similar means, each operatively connected to a respective output shaft 24. Each screw-nut thread device is provided with a threaded screw or shaft 25, supported rotating around an axis substantially horizontal and parallel to the second direction Y, and engaged by a nut thread 26 constrained to at least one of the arms 10 to which the second beams 11 are connected.

The rotation of the outlet shafts 24 sets the translation of the nut thread 26 and, in turn, the translation of the second beam 11 associated therewith.

By way of example, in order to balance the actuation of the first moving means 21, the at least one first gear motor group 22 can be provided at the centerline of the support frame 2, along one of the first beams 6.

Between each output shaft 24 and the respective first transmission member 23, an elastic joint 27 can be provided, in order to dampen possible impact or vibrations that could occur during the operation of the packaging and gripping group 1, ensuring the extremely fluid movement of the second beams 11.

The packaging and gripping group 1 comprises second means 28 for moving the gripping means 13 and/or the alignment and centering means 15 and/or the folding means 16 along the first direction X.

In the illustrated embodiment, the gripping means 13, the alignment and centering means 15 and the folding means 16 are connected to each other by means of a support 29.

In turn, the support 29 is slidably connected along the second sliding guide 12 by means of a slider element 30 or the like.

Further versions of the present invention, not illustrated, are nevertheless possible in which the gripping means 13 and/or the alignment and centering means 15 and/or the folding means 16 are movable independent from each other along the second slide guides 12, and are connected to the guides by means of respective slider elements.

According to such version, the packaging and gripping group 1 comprises respective moving means for the gripping means 13, the alignment and centering means 15 and the folding means 16.

According to one version of the present invention, each of the second beams 11 is operatively connected to respective second moving means 28 of the type analogous to that described for the first moving means 21.

In accordance with such version, the second moving means 28 can comprise second gear motor groups 31 and second motion transmission members 32, for example of ball bearing screw-nut thread type, or roller screw-nut thread type, or maneuver screw-nut thread devices with suitable thread profiles, or other devices adapted to transform a rotary motion into a linear motion, or similar means, for the sliding actuation of the gripping means 13 and/or the alignment and centering means 15 and/or the folding means 19 along each of the second beams 11.

The second moving means 28, nevertheless, can be of a different type but suitable for the objects of the present invention, without any limitation.

By way of example, each of the second gear motor groups 31 can comprise a pair of output shafts 33, opposite each other and aligned along the first direction X, and connected with a respective second motion transmission members 32.

As stated, if the second motion transmission members 32 comprise at least one ball bearing screw-nut thread device, or roller screw-nut thread device, or maneuver screw-nut thread device with suitable thread profiles; the device comprises at least one threaded screw or shaft 34, operatively connected at one end to a respective output shaft 33 and engaged by a nut thread 35, the latter constrained to the support 29.

In addition, between each output shaft 33 and the respective threaded shaft 34, an elastic joint 26 can be provided.

With reference to the illustrated embodiment, comprising two subgroups, the operative size of the packaging and gripping group 1 can be modified along the first direction X and/or along the second direction Y in a quick, precise and easy manner by means of the actuation, respectively, of the second moving means 28 and/or the first moving means 21.

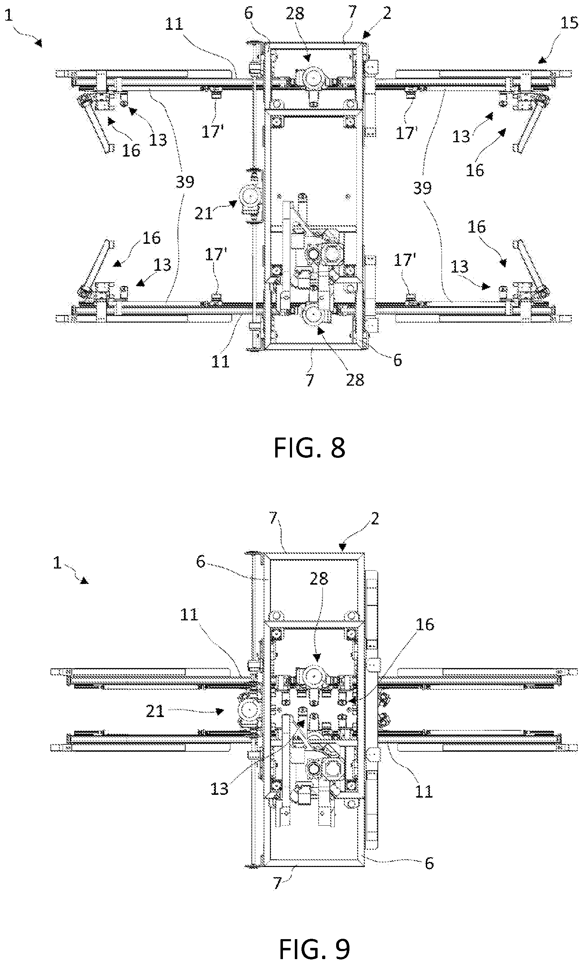

For such purpose, illustrated in figure 8 is an embodiment of the packaging and gripping group 1 in the maximum operative size configuration, while in figure 9 it is illustrated in minimum operative size configuration.

According to one version, the folding means 16 can comprise further first folding elements 17', each slidably connected to a respective second beam 11, along the second sliding guide 12, for example by means of a first slider 38. The further first folding elements 17' can be shaped in a manner substantially similar to the first folding elements 17.

According to one version of the present invention, the first folding elements 17 and the further first folding elements 17' can be operatively associated with each other by means of a driving member with variable length, indicated with 39, such as a piston, in order to modify the relative distance between the same and thus distribute, in a uniform manner, the applied stress of the first folding elements 17, 17' to the blank B.

In the illustrated embodiment, one end of the driving member with variable length 39 is constrained to the support 29, while the opposite end is connected to the further first folding element 17', by means of the first slider 38.

With regard to the possibility to adjust the operative size and facilitate the step of aligning and centering and the action of folding the blank B with respect to the second direction Y, the second abutment elements 15" and the second folding elements 18 can be movably connected, along the second sliding guide 12, with respect to the support 29.

By way of a non-limiting example, the second abutment elements 15" and the second folding elements 18 can be both constrained to a second support 40, actuatable to move with respect to the first support 29.

The second support 40 can be movably connected along the second guide 12 by means of a slider or the like.

Between the second support 40 and the first support 29, an intermediate driving member can be provided, for example a pneumatic or hydraulic piston, or piston of another type, adapted to move the second support 40 with respect to the first support 29.

In addition, the second abutment elements 15" and the second folding elements 18 can be connected to the second support 40, movable in vertical direction in order to facilitate the alignment, the centering and the folding of the blank B along the second direction Y, according to modes described hereinbelow.

In accordance with one version of the present invention, the packaging and gripping group 1 can comprise further second folding elements 18' in order to distribute the folding force applied to a blank B or sheet along the second direction Y, and make it correctly adhere around the edges of the article A aligned with such direction.

The further second folding elements 18' can be operatively connected to the second beams 11, in a position spaced from the second folding elements 18 along the second direction Y.

The further second folding elements 18' can be shaped in a manner substantially similar to the second folding elements 18 and usefully. According to one aspect of the present invention, the further second folding elements 18' can be moved close to/away from the second folding elements 18 by means of second driving members, as a function of the size of the article A to be packed and of the respective blank B to be folded.

With reference to the illustrated embodiment, the second driving members are indicated with the number 41 and can comprise an oscillating element 42, oscillating around a substantially horizontal axis, to which the further second folding elements 18' are constrained.

The oscillating element 42 can be rotated around a substantially horizontal rotation axis by means of a piston 43.

The piston 43 lifts/lowers the oscillating element 42 and consequently the further second folding elements 18' connected thereto.

If the article A to be packed has large size, the oscillating element 42 is maintained lowered in horizontal position (figure 8), while in the opposite case it is maintained in lifted position (figure 9), substantially vertical, in order to not interfere with further components of the packaging and gripping group 1. Further configurations of the second driving members 41 are nevertheless possible with respect to that reported above, without departing from the protective scope of the present invention.

Also in this case, all of the above-described actuation means, in order to obtain the modifications to the positioning of the folding means 16, are only actuated with commands coming from a suitable software installed in a control unit or by equivalent command means, and further adaptations or substitutions of mechanical elements are not necessary.

Hereinbelow, an operation of the packaging and gripping group 1 according to the present invention is briefly described, with reference to its use in a packaging station 100.

The packaging and gripping group 1 is moved above a store 104, in proximity to the blank B or sheet to be picked up.

By means of the alignment and centering means 15, the correct alignment and centering is obtained between the packaging and gripping group 1 and the blank B or sheet, along the first direction X and along the second direction Y and, subsequently, the blank B or sheet is picked up by means of the gripping means 13.

During the pick-up step, the robotic arm 4 is lowered and consequently vertically lowers the packaging and gripping group 1, moving it close to the blank B. The gripping means 13 are then actuated for picking up and holding the blank B or sheet.

Then, the packaging and gripping group 1, together with the blank B, are lifted and moved towards the line for advancing the products 101, at the position where the article A to be packed is situated; as stated, such position is precisely known.

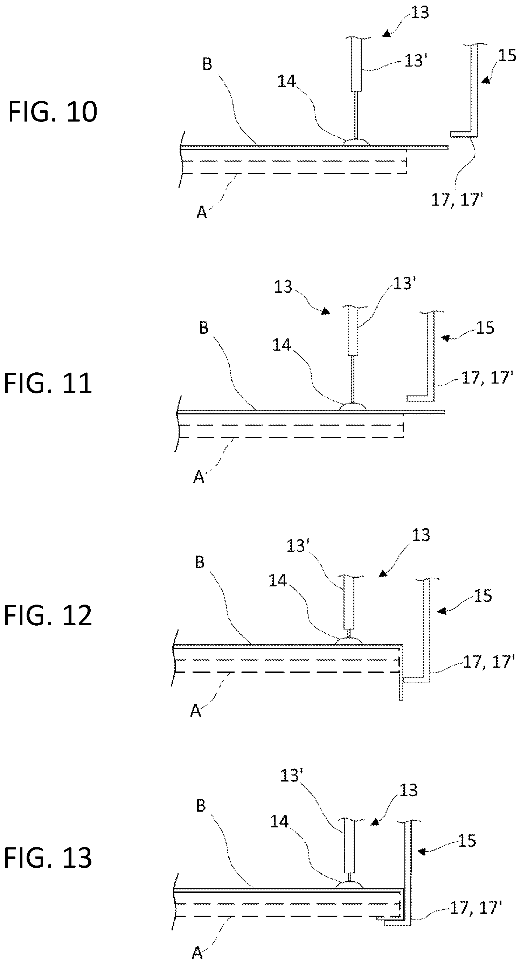

The packaging and gripping group 1 is aligned and centered above the article A and then lowered until the blank B or sheet is brought into abutment against the upper surface of the article A (figure 10).

Then, the first folding elements 17 and possibly the further first elements 17' are moved above the blank B - by means of the first moving means 21 - at the opposite free ends thereof, aligned along the first direction X, which project cantilevered from the article A (figure 11).

The packaging and gripping group 1 is subsequently lowered, bringing the first folding elements 17, and possibly the further first elements 17', in abutment against the blank B, causing the folding thereof against the opposite lateral edges of the article A, aligned along the first direction X.

It must be observed that the lowering of the packaging and gripping group 1 can occur by means of the movement of the arm 4 of the robot that supports it, thus simplifying the structure of the same packaging and gripping group 1 which does not have to comprise an actuator in order to obtain this movement. The descent of the packaging and gripping group 1 is stopped as soon as the end portions 19 of the first folding elements 17, 17' are situated below the bottom of the article A (figure 12).

Then, the second beams 11 are moved close to each other, along the second direction Y, once again by means of the first moving means 21, thus bringing the respective first folding elements 17, 17', associated thereto, in abutment against the lateral walls of the article A and further bending the blank B around the latter (figure 13).

During the folding step, the gripping means 13 maintain the blank B firmly in contact against the article A in order to avoid possible distortions or non-alignments of the package or the formation of undesired cavities between the article A and the blank B or sheet.

Once the first step of folding the blank B around the article A has terminated - intended as folding along the first direction X - the packaging and gripping group 1 proceeds with the folding of the blank B around one of the remaining sides of the article A, aligned along the second direction Y, and with the gluing of the same to the previously folded edges.

Then, analogously, there is the folding of the remaining side aligned along the second direction Y and its subsequent gluing against the previously folded edges along the first direction X, actually firmly closing the package around the article A, as better described hereinbelow.

In order to be able to execute the steps of folding the blank B or sheet along the second direction Y, it is necessary to lift the article A from the advancing station 101, and in particular from the belts 102.

For such purpose, it is observed that with the first folding elements 17, 17' placed below the article A, the packaging and gripping group 1 grasps, from below and laterally, the article A itself, in order to be able to move it into the packaging station 100 for the subsequent treatments.

The packaging and gripping group 1 is moved at the gluing station 108, in which the means for issuing glue, not illustrated in detail in the figures, apply a predefined amount of glue on the lower part of the previously folded edges, in predefined portions of the same edges.

According to one aspect of the present invention, the glue is applied to the lower edges of the blank B folded around the article A, at a first side of the article A oriented along the second direction Y.

Then, the blank B by means of the second folding elements 18, 18' is folded around such first side of the article A in a manner analogous to that described above.

One then proceeds in a similar manner for the opposite side of the article A, aligned along the second direction Y, thus obtaining the final package of the article A.

The glue is applied to the opposite sides of the article A, aligned along the second direction Y at different times, in order to avoid the same from dripping or being solidified (in the case of hot glue) and reducing the seal and integrity or preventing the gluing of the package itself.

It is observed that the second folding elements 18, 18' are constrained to the second beams 11 at a greater height than that of the first folding elements 17, 17', in order to be able to carry out the folding of the blank B around the sides of the article A at different times.

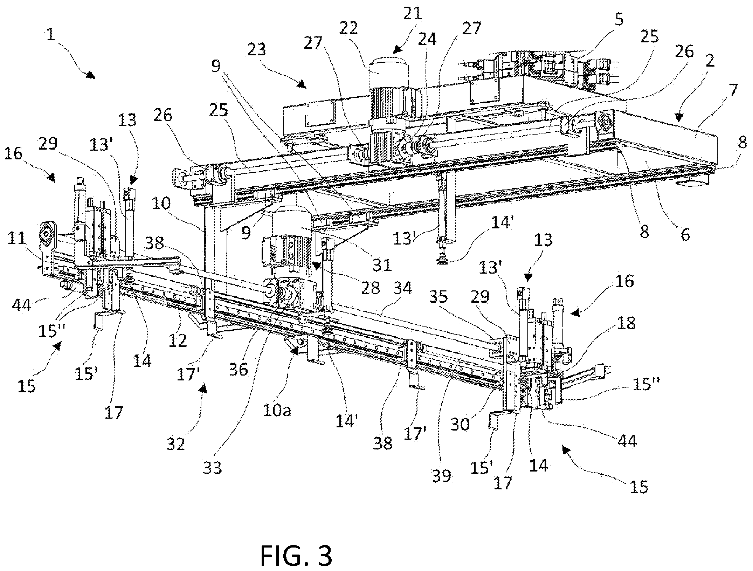

It must be observed that, according to one version of the present invention, the second folding elements 18, 18' are driven by respective actuator means 44 (figures 3 and 6), for example fluid cylinders, independently from each other, so as to be able to carry out the folding of the blank B on each side of the article A independently and immediately after the application of the glue.

The second folding elements 18, 18', at the end of the folding step, act as further elements for gripping the article A, together with the first folding elements 17, 17', which is then firmly retained by the packaging and gripping group 1.

The article A thus packed is then moved towards subsequent treatment stations or possibly towards a store.

The packaging and gripping group 1 according to the present invention can then be easily adapted to the size of the articles A to be packed, in the scope of an extremely effective and precise solution.

In particular, the times necessary for adapting the operative size of the packaging and gripping group 1 are extremely reduced.

Indeed, it must be observed that, as described above, all the actuations of the various parts of the group 1, and in particular the first moving means 21 and the second moving means 28, which allow an enlargement or a narrowing of the respective portions to which they are connected, i.e. the gripping means 13, the alignment and centering means 15 and the folding means 16, only occur with a command coming from a suitable software installed in a control unit, or by equivalent command means, and further adaptations or substitutions of mechanical elements are not necessary.

This signifies an increased productive frequency of the packaging station 100, since the equipping times necessary for adapting the operative size of the packaging and gripping group to that of the article A to be packed, are reduced to the minimum.

The position of the gripping means 13, of the alignment and centering means 15 and of the folding means 16 can be varied, in an extremely precise manner, within a wide range of values.

The invention thus conceived is susceptible of numerous modifications and variants, all falling within the scope of the attached claims.

In addition, all details can be substituted by other technically equivalent elements. In practice, the materials used, as well as the contingent shapes and sizes, can be of any type in accordance with requirements, without departing from the protective scope of the following claims.

## Claims

1. Packaging and gripping group for obtaining a packaging through the folding of a blank (B) or sheet around an article (A), comprising a support frame (2) connectable through coupling means (3) to a robotic arm (4), said support frame (2) defining at least one first direction (X) and one second direction (Y), transverse to each other, and comprising at least one pair of first sliding guides (8) aligned along said second direction (Y), and at least one pair of second beams (11) aligned parallel to each other along said first direction (X), each operatively connected slidingly to said at least one pair of first guides (8) through sliders (9), said second beams (11) each comprising at least one second sliding guide (12) aligned along said first direction (X), said packaging and gripping group comprising folding means (16) slidingly engaged along said second sliding guides (12) of said second beams (11), first moving means (21) of said pair of second beams (11) along said second direction (Y), and second means (28) for moving at least said folding means (16) along said first direction (X).

2. Packaging and gripping group according to claim 1, comprising alignment and centring means (15) of said blank (B) or sheet, comprising first abutment elements (15'), aligned substantially parallel to said first direction (X) and second abutment elements (15") aligned parallel to said second direction (Y), substantially shaped like folded brackets.

3. Packaging and gripping group according to the previous claim, wherein said alignment and centring means (15) can be connected to said second beams (11), sliding along said second guides (12) through slider elements.

4. Packaging and gripping group according to any one of the previous claims, comprising gripping means (13), to pick up and hold a blank (B) to be folded around said article, said gripping means (13) being connected to said second beams (11), movable along said second sliding guides (12).

5. Packaging and gripping group according to any one of the previous claims, wherein said folding means (16) comprise first folding elements (17, 17'), for the folding of said blank (B) or sheet along said first direction (X) and second folding elements (18, 18'), for the folding of said blank (B) or sheet along said second direction (Y).

6. Packaging and gripping group according to the previous claim, wherein said first folding elements (17, 17') and said second folding elements (18, 18') respectively comprise lower end portions (19, 20), for abutting with said blank (B) or sheet to be folded.

7. Packaging and gripping group according to any one of the previous claims, wherein said first moving means (21) comprise at least one first electric gear motor group (22) connected to first transmission members (23) operatively connected, in turn, to said second beams (11).

8. Packaging and gripping group according to any one of the previous claims, wherein each of said second beams (11) comprises second moving means (28), comprising at least one second gear motor group (31) and second transmission members (32) connected to said folding means (16).

9. Packaging and gripping group according to claim 7 or 8, when the latter depends on claim 7, wherein said first transmission members (23) and/or said second transmission members (32) are of the ball bearing screw-nut type, or roller screw-nut, or screw-nut maneuver devices with suitable thread profiles, or even other devices suitable for the conversion of a rotary motion into a linear motion, or similar means.

10. Packaging and gripping group according to any one of the previous claims, comprising second moving means (28) of said folding means (16) and/or of said gripping means (13) and/or of said alignment and centring means (15) along said first direction (X).

11. Packaging and gripping group according to one of the previous claims 5 to 10, wherein the second folding elements (18, 18') are operated by respective actuating means (44), for example fluid cylinders, independently one to each other, so as to independently carry out the folding of the blank (B) on each side of the article (A).

12. Production line for tiles, for example ceramic ones, comprising a packaging station (100) comprising at least one advancing line (101) of articles (A) or stacks of articles (A) to be packaged, at least one store (104) of blanks (B) or sheets stacked on each other, at least one gluing station (108) of a package formed by said article (A) and said blank (B) or sheet, and at least one Cartesian or anthropomorphic robot provided with an arm (4), **characterised in that it comprises** at least one packaging and gripping group according to any one of claims 1 to 11 connectable to said arm (4) of said robot.

13. Process for packaging an article (A) or a stack of articles (A), such as tiles or plates, through the folding of a blank (B) or a sheet around said article (A) or said stack of articles (A) by means of a packaging and gripping group according to any one of claims 1 to 11, comprising the steps of:
providing an article (A) or a stack of articles (A) to be packaged;
moving said packaging and gripping group at a store (104) comprising at least one stack (105, 106) of said blanks (B) or sheets;
picking up one of said blanks (B) or sheet;
positioning said blank (B) or sheet above said article (A) or stack of articles (A);
folding said blank (B) or said sheet around opposite sides of said article (A) or stack of articles (A) oriented along a first direction (X), by means of said first folding elements (17, 17');
picking up, by lifting it, said article (A) or said stack of articles (A) by means of said packaging and gripping group;
folding a side of said blank (B) or said sheet along a second direction (Y), transverse to said first direction (X), by means of said second folding elements (18, 18');
folding the side opposite to the previous one of said blank (B) or said sheet along said second direction (Y) by means of said second folding elements (18, 18');
depositing said article (A) or said stack of articles thus packed.

14. Process for packaging an article (A) or a stack of articles (A) according to claim 13, wherein said step of moving said packaging and gripping group at said store (104) comprises the step of aligning and centring above, said packaging and gripping group with respect to said stack (105, 106) of blanks (B) or sheets through said alignment and centring means (15).

15. Process for packaging an article (A) or a stack of articles (A) according to claim 13 or 14, comprising the step of applying a gluing agent on said blank (B) or sheet, at the folded ends of said blank (B) or sheet along the first direction (X) before folding the edges of said blank (B) along said second direction (Y).

## Patentansprüche

1. Verpackungs- und Greifgruppe zum Erhalten einer Verpackung durch Falten eines Zuschnitts (B) oder Bogens um einen Gegenstand (A) herum, umfassend einen Tragrahmen (2), der über Verbindungsmittel (3) mit einem Roboterarm (4) verbindbar ist, wobei der besagte Tragrahmen (2) mindestens eine erste Richtung (X) und eine zweite Richtung (Y) quer zueinander definiert und umfassend mindestens ein Paar erster Gleitführungen (8), die entlang der besagten zweiten Richtung (Y) ausgerichtet sind, und mindestens ein Paar zweiter Träger (11), die parallel zueinander entlang der besagten ersten Richtung (X) ausgerichtet sind, die jeweils mit dem einen Paar erster Führungen (8) durch Schieber (9) gleitend wirkverbunden sind , wobei die besagten zweiten Träger (11) jeweils mindestens eine zweite Gleitführung (12) aufweisen, die entlang der besagten ersten Richtung (X) ausgerichtet ist, wobei die Verpackungs- und Greifgruppe Faltmittel (16), die entlang der besagten zweiten Gleitführungen (12) der besagten zweiten Träger (11) gleitend eingreifen, erste Bewegungsmittel (21) des besagten Paares zweiter Träger (11) entlang der besagten zweiten Richtung (Y) und zweite Mittel (28) zum Bewegen mindestens der besagten Faltmittel (16) entlang der besagten ersten Richtung (X) umfassen.

2. Verpackungs- und Greifgruppe nach Anspruch 1, umfassend Ausrichtungs- und Zentriermittel (15) des besagten Zuschnitts (B) oder Bogens, umfassend erste Anschlagelemente (15'), im Wesentlichen parallel zu der besagten ersten Richtung (X) ausgerichtet, und zweite Anschlagelemente (15"), parallel zu der besagten zweiten Richtung (Y) ausgerichtet, die im Wesentlichen wie gebogene Klammern geformt sind.

3. Verpackungs- und Greifgruppe nach dem vorangehenden Anspruch, worin die Ausrichtungs- und Zentriermittel (15) mit den besagten zweiten Trägern (11) verbunden werden können, die entlang der besagten zweiten Führungen (12) durch Gleitelemente gleiten.

4. Verpackungs- und Greifgruppe nach irgendeinem der vorangegangenen Ansprüche, umfassend Greifmittel (13) zum Aufnehmen und Halten eines Zuschnitts (B), der um den besagten Gegenstand herum zu falten ist, wobei die besagten Greifmittel (13) mit den besagten zweiten Trägern (11), die entlang der besagten zweiten Gleitführungen (12) bewegbar sind, verbunden sind.

5. Verpackungs- und Greifgruppe nach irgendeinem der vorangegangenen Ansprüche, worin die besagten Faltmittel (16) erste Faltelemente (17, 17') zum Falten des besagten Zuschnitts (B) oder Bogens entlang der besagten ersten Richtung (X) und zweite Faltelemente (18, 18') zum Falten des besagten Zuschnitts (B) oder Bogens entlang der besagten zweiten Richtung (Y) umfassen.

6. Verpackungs- und Greifgruppe nach dem vorangehenden Anspruch, worin die besagten ersten Faltelemente (17, 17') und die besagten zweiten Faltelemente (18, 18') jeweils untere Endabschnitte (19, 20) zum Anschlagen an den besagten zu faltenden Zuschnitt (B) oder Bogen umfassen.

7. Verpackungs- und Greifgruppe nach irgendeinem der vorangegangenen Ansprüche, worin die besagten ersten Bewegungsmittel (21) mindestens eine erste elektrische Getriebemotorgruppe (22) umfassen, die mit ersten Übertragungselementen (23) verbunden ist, die ihrerseits mit den besagten zweiten Trägern (11) wirkverbunden sind.

8. Verpackungs- und Greifgruppe nach irgendeinem der vorangegangenen Ansprüche, worin jeder der besagten zweiten Träger (11) zweite Bewegungsmittel (28) umfasst, die mindestens eine zweite Getriebemotorgruppe (31) und zweite Übertragungselemente (32) umfassen, die mit den besagten Faltmitteln (16) verbunden sind.

9. Verpackungs- und Greifgruppe nach Anspruch 7 oder 8, wenn letzterer von Anspruch 7 abhängt, worin die besagten ersten Übertragungselemente (23) und/oder die besagten zweiten Übertragungselemente (32) vom Typ Kugellager-Schraubenmutter oder Walzenschraubenmutter oder Schraubenmutter-Betätigungsvorrichtungen mit geeigneten Gewindeprofilen oder auch andere Vorrichtungen, die zur Umwandlung einer Drehbewegung in eine Linearbewegung geeignet sind, oder ähnliche Mittel sind.

10. Verpackungs- und Greifgruppe nach irgendeinem der vorangegangenen Ansprüche, umfassend zweite Bewegungsmittel (28) der besagten Faltmittel (16) und/oder der besagten Greifmittel (13) und/oder der besagten Ausrichtung und Zentriermittel (15) entlang der besagten ersten Richtung (X).

11. Verpackungs- und Greifgruppe nach einem der vorangegangenen Ansprüche 5 bis 10, worin die zweiten Faltelemente (18, 18') durch entsprechende Betätigungsmittel (44), beispielsweise Fluidzylinder, unabhängig voneinander betätigt werden, um das Falten des Zuschnitts (B) auf jeder Seite des Gegenstands (A) unabhängig auszuführen.

12. Produktionslinie für Fliesen, zum Beispiel Keramikfliesen, umfassend eine Verpackungsstation (100), die mindestens eine Vorschublinie (101) von zu verpackenden Gegenständen (A) oder zu verpackenden Stapeln von Gegenständen (A), mindestens ein Magazin(104) von aufeinander gestapelten Zuschnitten (B) oder Bögen, mindestens eine Klebestation (108) einer aus dem besagten Gegenstand (A) und dem besagten Zuschnitt (B) oder Bogen gebildeten Verpackung und mindestens einen mit einem Arm (4) versehenen kartesischen oder anthropomorphen Roboter umfasst, **dadurch gekennzeichnet, dass** sie mindestens eine Verpackungs- und Greifgruppe nach irgendeinem der Ansprüche 1 bis 11 umfasst, die mit dem besagten Arm (4) des besagten Roboters verbindbar ist.

13. Verfahren zum Verpacken eines Gegenstands (A) oder eines Stapels von Gegenständen (A), wie Fliesen oder Platten, durch das Falten eines Zuschnitts (B) oder eines Bogens um den besagten Gegenstand (A) oder den besagten Stapel von Gegenständen (A) herum mittels einer Verpackungs- und Greifgruppe nach irgendeinem der Ansprüche 1 bis 11, umfassend die Schritte des:
Bereitstellens eines zu verpackenden Gegenstands (A) oder eines zu verpackenden Stapels von Gegenständen (A) ;
Bewegens der besagten Verpackungs- und Greifgruppe an ein Magazin (104), umfassend mindestens einen Stapel (105, 106) der besagten Zuschnitte (B) oder Bögen;
Aufnehmens eines der besagten Zuschnitte (B) oder Bögen;
Positionierens des besagten Zuschnitts (B) oder Bogens über dem besagten Gegenstand (A) oder Stapel von Gegenständen (A);
Faltens des besagten Zuschnitts (B) oder des besagten Bogens um die gegenüberliegenden Seiten des besagten Gegenstands (A) oder Stapels von Gegenständen (A), der entlang einer ersten Richtung (X) ausgerichtet ist, herum mittels der besagten ersten Faltelemente (17, 17');
Aufnehmens des besagten Gegenstands (A) oder des besagten Stapels von Gegenständen (A) durch Anheben mittels der besagten Verpackungs- und Greifgruppe; Faltens einer Seite des besagten Zuschnitts (B) oder des besagten Bogens entlang einer zweiten Richtung (Y), die quer zu der besagten ersten Richtung (X) ist, mittels der besagten zweiten Faltelemente (18, 18'); Faltens der Seite, die der vorherigen des besagten Zuschnitts (B) oder des besagten Bogens gegenüberliegt, entlang der besagten zweiten Richtung (Y) mittels der besagten zweiten Faltelemente (18, 18'); Ablegens des besagten somit verpackten Gegenstands (A) oder besagten Stapels von Gegenständen.

14. Verfahren zum Verpacken eines Gegenstands (A) oder eines Stapels von Gegenständen (A) nach Anspruch 13, worin der Schritt des Bewegens der besagten Verpackungs- und Greifgruppe an dem besagten Magazin (104) den Schritt des Ausrichtens und Zentrierens oben der besagten Verpackungs- und Greifgruppe in Bezug auf den besagten Stapel (105, 106) von Zuschnitten (B) oder Bögen durch die besagte Ausrichtungs- und Zentriereinrichtung (15) umfasst.

15. Verfahren zum Verpacken eines Gegenstands (A) oder eines Stapels von Gegenständen (A) nach Anspruch 13 oder 14, umfassend den Schritt des Auftragens eines Klebemittels auf den besagten Zuschnitt (B) oder Bogen an den gefalteten Enden des besagten Zuschnitts (B) oder Bogens entlang der ersten Richtung (X) vor dem Falten der Kanten des besagten Zuschnitts (B) entlang der besagten zweiten Richtung (Y).

## Revendications

1. Groupe d'emballage et de préhension pour obtenir un emballage grâce au pliage d'un flan (B) ou d'une feuille autour d'un article (A), comprenant un bâti de support (2) pouvant être raccordé grâce à des moyens d'accouplement (3) à un bras robotique (4), ledit bâti de support (2) définissant au moins une première direction (X) et une deuxième direction (Y), transversales l'une à l'autre, et comprenant au moins une paire de premiers guides coulissants (8) alignés le long de ladite deuxième direction (Y), et au moins une paire de deuxièmes poutres (11) alignées parallèlement l'une à l'autre le long de ladite première direction (X), chacune étant raccordée pendant l'utilisation de manière coulissante à ladite au moins une paire de premiers guides (8) grâce à des coulisseaux (9), lesdites deuxièmes poutres (11) comprenant chacune au moins un deuxième guide coulissant (12) aligné le long de ladite première direction (X), ledit groupe d'emballage et de préhension comprenant des moyens de pliage (16) accouplés de manière coulissante le long desdits deuxièmes guides coulissants (12) desdites deuxièmes poutres (11), premiers moyens de déplacement (21) de ladite paire de deuxièmes poutres (11) le long de ladite deuxième direction (Y), et des deuxièmes moyens (28) pour déplacer au moins lesdits moyens de pliage (16) le long de ladite première direction (X).

2. Groupe d'emballage et de préhension selon la revendication 1, comprenant des moyens d'alignement et de centrage (15) dudit flan (B) ou de ladite feuille, comprenant des premiers éléments de butée (15'), alignés sensiblement parallèlement à ladite première direction (X) et des deuxièmes éléments de butée (15") alignés parallèlement à ladite deuxième direction (Y), sensiblement en forme de supports repliés.

3. Groupe d'emballage et de préhension selon la revendication précédente, dans lequel lesdits moyens d'alignement et de centrage (15) peuvent être raccordés auxdites deuxièmes poutres (11), coulissant le long desdits deuxièmes guides (12) grâce à des éléments de coulisseau.

4. Groupe d'emballage et de préhension selon l'une quelconque des revendications précédentes, comprenant des moyens de préhension (13), pour prélever et maintenir un flan (B) qui doit être replié autour dudit article, lesdits moyens de préhension (13) étant raccordés auxdites deuxièmes poutres (11) mobiles le long desdits deuxièmes guides coulissants (12).

5. Groupe d'emballage et de préhension selon l'une quelconque des revendications précédentes, dans lequel lesdits moyens de pliage (16) comprennent des premiers éléments de pliage (17, 17'), pour le pliage dudit flan (B) ou de ladite feuille le long de ladite première direction (X) et des deuxièmes éléments de pliage (18, 18') pour le pliage dudit flan (B) ou de ladite feuille le long de ladite deuxième direction (Y).

6. Groupe d'emballage et de préhension selon la revendication précédente, dans lequel lesdits premiers éléments de pliage (17, 17') et lesdits deuxièmes éléments de pliage (18, 18') comprennent respectivement des parties d'extrémité inférieure (19, 20) pour entrer en butée avec ledit flan (B) ou ladite feuille qui doivent être repliés.

7. Groupe d'emballage et de préhension selon l'une quelconque des revendications précédentes, dans lequel lesdits premiers moyens de déplacement (21) comprennent au moins un premier groupe motoréducteur électrique (22) raccordé à des premiers éléments de transmission (23) raccordés pendant l'utilisation, à leur tour, auxdites deuxièmes poutres (11).

8. Groupe d'emballage et de préhension selon l'une quelconque des revendications précédentes, dans lequel chacune desdites deuxièmes poutres (11) comprend des deuxièmes moyens de déplacement (28), comprenant au moins un deuxième groupe motoréducteur (31) et des deuxièmes éléments de transmission (32) raccordés auxdits moyens de pliage (16).

9. Groupe d'emballage et de préhension selon la revendication 7 ou 8, quand cette dernière dépend de la revendication 7, dans lequel lesdits premiers éléments de transmission (23) et/ou lesdits deuxièmes éléments de transmission (32) sont du type écrou de vis à roulement à bille, ou écrou de vis à rouleaux, ou des dispositifs de manoeuvre à écrou de vis avec des profils de filetage appropriés, voire d'autres dispositifs adaptés pour la conversion d'un mouvement rotatif en mouvement linéaire, ou des moyens similaires.

10. Groupe d'emballage et de préhension selon l'une quelconque des revendications précédentes, comprenant des deuxièmes moyens de déplacement (28) desdits moyens de pliage (16) et/ou desdits moyens de préhension (13) et/ou desdits moyens d'alignement et de centrage (15) le long de ladite première direction (X).

11. Groupe d'emballage et de préhension selon l'une des revendications précédentes 5 à 10, dans lequel les deuxièmes éléments de pliage (18, 18') sont actionnés par des moyens d'actionnement (44) respectifs, par exemple des cylindres à fluide, indépendamment l'un de l'autre, afin de réaliser indépendamment le pliage du flan (B) sur chaque côté de l'article (A).

12. Ligne de production pour tuiles, par exemple des tuiles céramiques, comprenant une station d'emballage (100) comprenant au moins une ligne de progression (101) des articles (A) ou piles d'articles (A) devant être emballés, au moins un magasin (104) de flans (B) ou de feuilles empilés les uns sur les autres, au moins une station de collage (108) d'un emballage formé par ledit article (A) et ledit flan (B) ou ladite feuille, et au moins un robot cartésien ou anthropomorphique doté d'un bras (4), **caractérisée en ce qu'**elle comprend au moins un groupe d'emballage et de préhension selon l'une quelconque des revendications 1 à 11 pouvant être raccordé audit bras (4) dudit robot.

13. Procédé d'emballage d'un article (A) ou d'une pile d'articles (A), telles que des tuiles ou des plaques, par le pliage d'un flan (B) ou d'une feuille autour dudit article (A) ou ladite pile d'articles (A) au moyen d'un groupe d'emballage et de préhension selon l'une quelconque des revendications 1 à 11, comprenant les étapes de :
fourniture d'un article (A) ou d'une pile d'articles (A) devant être emballés ;
déplacement dudit groupe d'emballage et de préhension dans un magasin (104) comprenant au moins une pile (105, 106) desdits flans (B) ou desdites feuilles ;
prélèvement de l'un desdits flans (B) ou desdites feuilles ;
positionnement dudit flan (B) ou de ladite feuille au-dessus dudit article (A) ou de ladite pile d'articles (A) ;
pliage dudit flan (B) ou de ladite feuille autour des côtés opposés dudit article (A) ou de ladite pile d'articles (A) orientés le long d'une première direction (X), au moyen desdits premiers éléments de pliage (17, 17') ;
prélèvement, en le soulevant, dudit article (A) ou de ladite pile d'articles (A) au moyen dudit groupe d'emballage et de préhension ;
pliage d'un côté dudit flan (B) ou de ladite feuille le long d'une deuxième direction (Y), transversale à ladite première direction (X), au moyen desdits deuxièmes éléments de pliage (18, 18') ;
pliage du côté opposé au précédent dudit flan (B) ou de ladite feuille le long de ladite deuxième direction (Y) au moyen desdits deuxièmes éléments de pliage (18, 18') ; dépôt dudit article (A) ou de ladite pile d'articles ainsi emballés.

14. Procédé d'emballage d'un article (A) ou d'une pile d'articles (A) selon la revendication 13, dans lequel ladite étape de déplacement dudit groupe d'emballage et de préhension dans ledit magasin (104) comprend l'étape d'alignement et de centrage qui précède, dudit groupe d'emballage et de préhension par rapport à ladite pile (105, 106) de flans (B) ou de feuilles avec lesdits moyens d'alignement et de centrage (15).

15. Procédé d'emballage d'un article (A) ou d'une pile d'articles (A) selon la revendication 13 ou 14, comprenant l'étape d'application d'un agent de collage sur ledit flan (B) ou ladite feuille, sur les extrémités repliées dudit flan (B) ou de ladite feuille le long de la première direction (X) avant le pliage des bords dudit flan (B) le long de ladite deuxième direction (Y).
